# EUROPÄISCHE PATENTANMELDUNG

(11) **EP 1 211 006 A1**
(43) Veröffentlichungstag der Anmeldung: **05.06.2002**
(21) Anmeldenummer: 01811000.7
(22) Anmeldetag: 15.10.2001
(51) Int. Cl.: B23C 3/04, B23C 3/12, B23B 5/16, B23Q 7/05, B65G 35/06

(54) **Kantenfräsmaschine zum Anfasen von Schnittkanten an den Enden von Rohren und zylindrischem Stangenmaterial**

(30) Priorität: 24.11.2000 CH 22832000
(71) Anmelder: Alme AG, 8355 Aadorf (CH)
(72) Erfinder: Bonetti, Egizio-Michael, 8356 Ettenhausen (CH)
(74) Vertreter: Gachnang, Hans Rudolf

(57) **Zusammenfassung**

Die Kantenfräsmaschine (1) ist mit einer Werkstückaufnahme, umfassend Tragrollen (61), Räder (67) sowie ein Vorschubrad (43) für die Bearbeitung von kreisrunden stangenförmigen Werkstücken (23) ausgebildet. Die Werkstücke (23) liegen lose auf den Rollen( 61) und an den Rädern (67) an und werden durch das Vorschubrad (43) an den Fräskopf (7) der Kantenfräsmaschine (1) angepresst.

## Beschreibung

Gegenstand der Erfindung ist eine Kantenfräsmaschine gemäss Oberbegriff des Patentanspruchs 1.

Beim Zuschneiden von zylindrischen Rohren und zylindrischem Voll- oder Stangenmaterial entstehen scharfe Kanten, die einerseits zu Verletzungen der mit den Werkstücken beschäftigten Personen führen können und es lassen sich zudem diese Kanten im vorliegenden Zustand nicht weiterverarbeiten, d.h. sie können weder geschweisst noch anderswie bearbeitet werden.

Aus dem Stand der Technik ist bekannt, Rohre auf einer Drehbank einzuspannen und die stirnseitigen Schnittkanten abzudrehen. Dieser Vorgang ist zeitlich aufwendig und die Werkstücke müssen einzeln axial in die Drehbank eingeführt, im Futter festgespannt und danach bearbeitet werden. Bei langen Werkstücken, diese können fünf bis zehn Meter lang sein, ist diese Arbeit beschwerlich. Grössere Rohre können zudem ein Gewicht aufweisen, das nur durch mehrere Leute oder mit Hebewerkzeugen bewältigt werden kann.

Aufgabe der vorliegenden Erfindung ist die Schaffung einer Kantenfräsmaschine, welche das Kantenfräsen, auch Anfasen genannt, von Rohren unterschiedlicher Durchmesser auf einfache und kostengünstige Weise ermöglicht.

Gelöst wird diese Aufgabe durch eine Kantenfräsmaschine mit den Merkmalen des Patentanspruchs 1.

Die erfindungsgemässe Kantenfräsmaschine ermöglicht es, zylindrische Werkstücke von im wesentlichen beliebiger Länge und im wesentlichen beliebigen Durchmessern auf ein und derselben Maschine zu bearbeiten, ohne dass beim Werkstückwechsel die Werkstücke angehoben oder auf andere komplizierte Weise an die Fräsmaschine herangebracht bzw. in deren Werkzeug eingeführt werden müssen. Die Werkstücke können auf einer vor der Kantenfräsmaschine angeordneten Rollenbahn mit geringem Kraftaufwand von einer Person verschoben werden. Das Umrüsten der Kantenfräsmaschine beim Werkstückwechsel, d.h. einem Wechsel von Werkstücken mit anderem Durchmesser, kann mit wenigen Handgriffen erfolgen. Gleiches gilt für die Verstellung des Anfaswinkels und der Fasenbreite.

Anhand eines illustrierten Ausführungsbeispiels wird die Erfindung näher erläutert. Es zeigen:
- Figur 1: eine Grundrissdarstellung der Gesamtanlage (schematisch),
- Figur 2: eine Vorderansicht der Kantenfräsmaschine aus Richtung des Pfeils A in Figur 1,
- Figur 3: eine Detailaufsicht auf die Kantenfräsmaschine und eines Teils des Zuführtisches und
- Figur 4: eine schematische Darstellung der Werkstückaufnahme durch die Tragrollen, das Halterad sowie das Vorschubrad.

Die in den Figuren dargestellte Kantenfräsmaschine 1 umfasst ein Gehäuse 3 und einen darin angeordneten Antriebsmotor 5 mit einer Lagerung für einen Fräskopf 7. Die elektrischen Steuerungselemente sind nicht näher erläutert und auch nicht dargestellt. Sie sind vorzugsweise im Gehäuse 3 untergebracht und können über ein Bedienungspult 4 bedient werden. Seitlich des Gehäuses 3 sind durch zwei horizontal liegende Führungsstangen 9 miteinander verbundene Träger 11 befestigt. Die beiden Träger 11 sind zusammen mit den Stangen 9 am Gehäuse 3 vertikal verschieb- und durch nicht dargestellte Mittel in der eingestellten Höhenlage arretierbar. Zwischen den beiden Trägern 11 sind eine untere Werkstückaufnahme 19 in Gestalt einer Platte und eine stirnseitige Werkstückführung 17 ebenfalls in Gestalt einer Platte angeordnet. Die vertikal liegende Werkstückführung 17 ist horizontal verschiebbar, um die Breite eines zwischen der horizontalen Werkstückaufnahme 19 und der vertikalen Werkstückführung 17 liegenden Spalts 21 einstellen zu können. In den Spalt 21 ragen die spanabhebenden Zähne oder Wendeplatten des Fräskopfs 7.

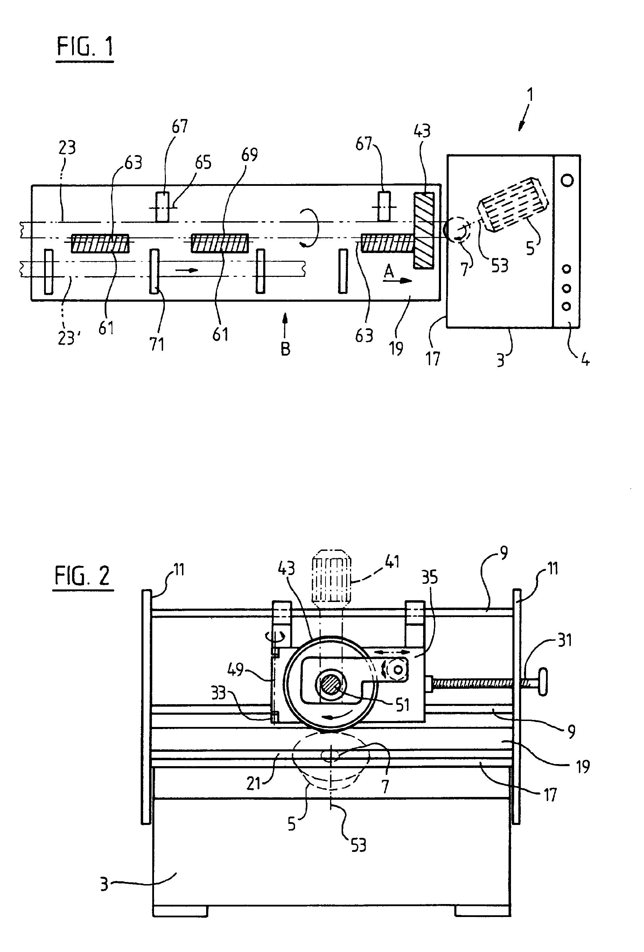

An den beiden Stangen 9 sind verschiebbare Führungsbüchsen 25 aufgesteckt, die mit einer Tragplatte 27 fest verbunden oder Teil der Tragplatte 27 sein können. Die Tragplatte 27 kann nach dem Lösen einer Feststellschraube 29 an den Büchsen 25 in horizontaler Richtung entlang der Stangen 9 verschoben werden. Falls eine Verstellspindel 31 vorgesehen ist, kann die horizontale Verstellung durch letztere vorgenommen werden (vgl. Figur 2). In dieser Ausführung können die Feststellschrauben 29 entfallen.

Auf der Tragplatte 27 ist mittels eines Scharniers 33 eine Trägerplatte 35 schwenkbar gelagert. Auf dieser ist ein Lagerzapfen 37 aufgeschweisst, an dessen freiem Ende schwenkbar ein Arm 39 angelenkt ist. Der Arm 39 trägt an seinem andern Ende eine Motor-/Getriebeeinheit 41, an der abtriebsseitig fliegend ein Vorschubrad 43 mit einer Lauffläche aus Kunststoff oder aus Gummi befestigt ist. Die Motor-/Getriebeeinheit 41 ist fest mit dem Arm 39 verbunden. Mit einer zweiten Spindel 45 kann der Arm 39 in Richtung der Pfeile 46 parallel zur Trägerplatte 35 verschoben werden. Die Trägerplatte 35 lässt sich mittels einer Schwenkspindel 47 um die Schwenkachse 49, die sich im Scharnier 33 befindet, schwenken, damit die Welle 51 des Vorschubrades 43 bezüglich der Vorschubrichtung eines auf der Werkaufnahme 19 liegenden Werkstücks 23 geschwenkt werden kann.

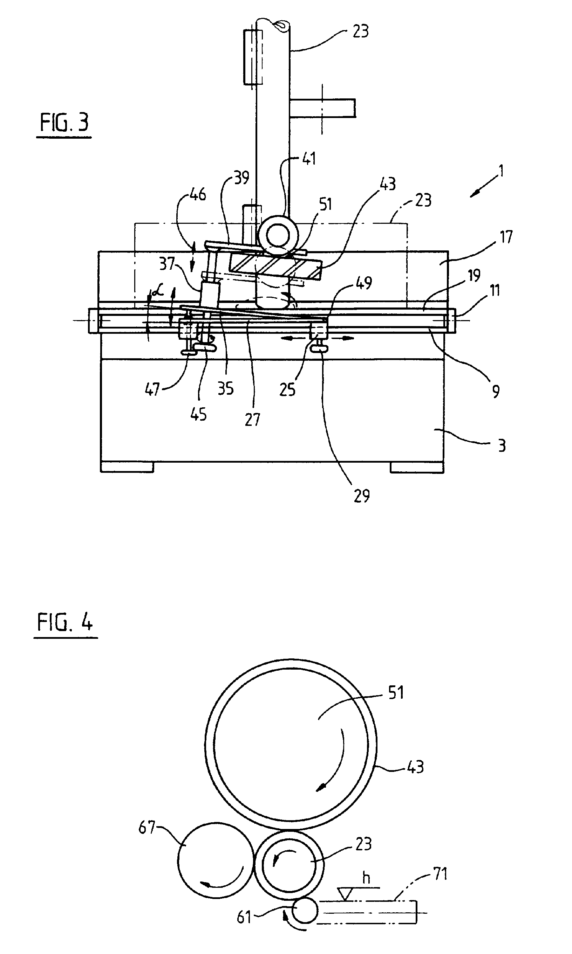

Die horizontal liegende Werkstückaufnahme 19 umfasst eine Anzahl koaxial angeordneter Tragrollen 61, welche die Oberfläche der Werkstückaufnahme 19 überragen. Zwischen den Rollen 61, deren gemeinsame Drehachsen 63 horizontal liegen und rechtwinklig zur Werkstückführung 17 stehen, sind auf einer parallel dazu verlaufenden gemeinsamen Achse 65 vorzugsweise einen grösseren Durchmesser aufweisende Rollen 67 befestigt. Die gemeinsame Achse 65 der Rollen 67 liegt höher als die Achse 63 der Rollen 61. Die Peripherie der Räder 67 ist vorzugsweise glatt; diejenige der Rollen 61 ist vorzugsweise mit Schrauben-Gewindegängen 69 versehen. Diese Gewindegänge 69 bewirken einen Vorschub bzw. eine in Richtung A wirkende Kraft auf das Werkstück 23, d.h. auf das Rohr oder die zylindrische Stange, welche auf den Rollen 61 und seitlich an den Rädern 67 anliegt und von diesen beabstandet zur Oberfläche der Werkstückaufnahme 19 drehbar getragen wird. Die Drehachse der Werkstücke 23 liegt folglich zwischen den Drehachsen 63, 65 der Rollen 61 und der Räder 67. Das vordere Ende des Werkstücks 23 liegt am Ende der Bearbeitung, d.h. nach der Fertigstellung der Anfasung, an der Oberfläche der Werkstückführung 17 an. Das Vorschubrad 43, dessen Drehachse vorzugsweise vertikal oberhalb der Drehachse des Werkstücks 23 positioniert wird, drückt von oben auf den Scheitel des Werkstücks 23. Dieses ist dadurch im Bearbeitungsbereich von drei Seiten geführt gehalten, nämlich von unten durch die Rolle 61, von der Seite durch das Rad 67 und von oben durch das Vorschubrad 43 (vgl. Figur 4). In Figur 4 ist zudem in strichpunktierten Linien eine Zuführwalze 71 angedeutet (diese ist auch in Figur 1 dargestellt) und dient dazu, Werkstücke 23' in Richtung des Pfeils A in Warteposition zu führen (Figur 1). Die Werkstücke 23' gelangen aus einem Stangenlager, welches sich auf der linken Seite der Figur 1 befindet, auf diese Weise ohne Kraftaufwand für die Bedienungsperson in Wartestellung parallel zum Werkstück 23, das sich in Bearbeitung befindet.

Im folgenden werden die Funktionsweisen der Fräs-, der Trag- und Vorschubvorrichtung sowie die Verstell-Einrichtung des Vorschubrads 43 erläutert. Ein Werkstück 23' in Warteposition wird in Richtung des Pfeils B (Figur 1) axial auf den Transportrollen 71 herangeführt und dann seitlich auf den Scheitel der Tragrollen 61 gerollt. Die Scheitel beider Elemente (Transportrollen (71) und Tragrollen (61)) liegen etwa auf gleicher Höhe h. In dieser Position ist das Werkstück 23 gestützt von den Rädern 67 frei drehbar gehalten. Anschliessend wird das Vorschubrad 43 von oben auf den Scheitel des Werkstücks 23 abgesenkt. Die Drehachse 51 des Vorschubrades 43 liegt vorzugsweise vertikal über der Drehachse des Werkstücks 23. Bei einem Werkstückwechsel, d.h. Durchmesserwechsel des Werkstücks 23, kann die Lage des Vorschubrades 43, wie nachfolgend beschrieben werden wird, ein- und verstellt werden. Nach dem Absenken des Vorschubrades 43 wird dieses durch den Antriebsmotor 41 in Drehung versetzt und das Werkstück 23 durch die schraubenförmig verlaufenden Rippen 69 auf den Rollen 61 in Richtung des Pfeils A vorgeschoben bis das stirnseitige Ende des Werkstücks 23 an der Werkstückführung 17 anliegt. Beim Vorschub gelangt die anfänglich rechtwinklige Kante des Werkstücks 23 in den Arbeitsbereich des Fräskopfs 7, und es wird die Kante im gewünschten, d.h. in einem voreingestellten Winkel abgefräst. Das Abfräsen erfolgt kontinuierlich beim zwangsweisen Vorschub in Richtung A des Werkstücks 23, bis dessen Stirnfläche vollständig an der Werkstückführung 17 anliegt. Der Schneidewinkel des Fräskopfs 7 kann durch hier nicht dargestellte Stellmittel eingestellt werden. Ebenso kann der Vorschub des Vorschubrads 43 durch Verstellung von dessen Drehachse 51 bezüglich der Werkstückdrehachse verändert werden. Ausgehend von einer Grundstellung, in welcher die Achse der Welle 51 des Vorschubrades 43 parallel zur Achse des Werkstücks 23 liegt, kann durch Drehen an der Schwenkspindel 47 das Vorschubrad 43 in einem Winkel alpha (vgl. 3) angestellt werden. Dieser Anstellwinkel alpha bewirkt, dass das Werkstück 23 vom Vorschubrad 43 mit mehr oder weniger Kraft an die Werkstückführung 17 angepresst wird. Die Anpressung des Werkstücks 23 an die Tragrollen 61 und die Räder 67 erfolgt vorzugsweise durch das Eigengewicht des Vorschubrades 43 sowie das Gewicht der Motor-/Getriebeeinheit 41. Falls notwendig, kann die Masse der am Lagerzapfen 37 aufgehängten Elemente durch ein Gegengewicht oder eine rückstellende Feder vermindert werden (keine Abbildung). Bezüglich der Drehachse 53 des Fräskopfs 7 lässt sich die gesamte Vorschubeinheit auch in horizontaler Richtung längs der Stangen 9 verstellen. Nach dem Lösen der Feststellschraube 29 kann die Verstellung durch die Verstellschraube 31 oder, falls eine solche nicht vorhanden ist, von Hand erfolgen.

Durch die Spindel 45 lässt sich der Arm samt den darauf befestigten Elementen, nämlich der Motor-/Getriebeeinheit 41 und dem Vorschubrad 43 parallel zur Trägerplatte 35 verschieben, so dass bei allen Werkstücken 23, unabhängig von deren Durchmesser, die Auflage des Vorschubrades 43 an geeigneter Stelle, d.h. im wesentlichen im oberen Scheitel der Werkstücke 23, erfolgen kann.

## Patentansprüche

1. Kantenfräsmaschine (1) zum Anfasen von Schnittkanten an den Enden von Rohren und zylindrischem Stangenmaterial (23), umfassend ein spanabhebendes Werkzeug (7), dessen Schnitt-Winkellage bezüglich des Werkstücks einstellbar ist, eine Aufnahmevorrichtung (19,61,67) für das Werkstück (23) während des Fräsvorgangs und ein Mittel (43) zur Erzeugung einer Relativbewegung zwischen dem Werkstück (23) und dem Werkzeug (7), **dadurch gekennzeichnet, dass** die Werkstück-Aufnahme (19) mindestens zwei koaxial angeordnete Tragrollen (61) umfasst, auf denen das Werkstück (23) zur Auflage gelangt, dass mindestens zwei koaxial zueinander liegende, mit dem Werkstück (23) seitlich in Anlage gelangende und seitlich versetzt zu den Rollen (61) angeordnete Räder (67) vorgesehen sind und dass zur Erzeugung der Vorschubbewegung ein angetriebenes Vorschubrad (43) oberhalb der Rollen (61) vertikal verschieb- und auf das Werkstück (23) absenkbar aufgehängt ist.

2. Kantenfräsmaschine nach Anspruch 1, **dadurch gekennzeichnet, dass** auf der Peripherie der Rollen (61) schraubenlinienförmig verlaufende Gewindegänge (69) ausgebildet sind.

3. Kantenfräsmaschine nach einem der Ansprüche 1 oder 2, **dadurch gekennzeichnet, dass** die gemeinsame Drehachse (65) der Räder (67) höher liegt als die gemeinsame Drehachse (63) der Rollen (61).

4. Kantenfräsmaschine nach einem der Ansprüche 1 bis 3, **dadurch gekennzeichnet, dass** auf der Werkstückaufnahme (19) Zuführwalzen (71) mit lotrecht zu den Drehachsen (63,65) liegenden Drehachsen angeordnet sind, deren Scheitel im wesentlichen auf gleicher Höhe (h) liegen wie die Scheitel der Rollen (61).

5. Kantenfräsmaschine nach einem der Ansprüche 1 bis 4, **dadurch gekennzeichnet, dass** die vertikale Werkstückführung (17) bezüglich des Fräskopfs (7) verstellbar ist.

6. Kantenfräsmaschine nach einem der Ansprüche 1 bis 5, **dadurch gekennzeichnet, dass** die Lage des Vorschubrads (43) sowohl axial als auch vertikal und seitlich ein-und verstellbar ist.

7. Kantenfräsmaschine nach einem der Ansprüche 1 bis 6, **dadurch gekennzeichnet, dass** der Winkel der Drehachse (51) des Vorschubrads (43) bezüglich der Achsen der Rollen (61) und Räder (67) einstellbar ist.
